# EUROPÄISCHE PATENTSCHRIFT

(11) **EP 2 792 567 B1**
(45) Veröffentlichungstag und Bekanntmachung des Hinweises auf die Patenterteilung: **24.06.2015**
(21) Anmeldenummer: 13163702.7
(22) Anmeldetag: 15.04.2013
(51) Int. Cl.: B61C 9/44, H02K 1/18, H02K 7/14, H02K 5/06

(54) **Elektrische Maschine mit Gehäuse über Teilumfang**
Electric machine with housing over partial circumference
Machine électrique avec boîtier sur une partie de sa périphérie

(43) Veröffentlichungstag der Anmeldung: 22.10.2014
(73) Patentinhaber: Siemens Aktiengesellschaft, 80333 München (DE)
(72) Erfinder: Pfannschmidt, Bernd, 90574 Rosstal (DE)

(56) Entgegenhaltungen:
- EP-A1- 2 113 663
- DE-A1- 2 432 178
- DE-C- 860 823
- GB-A- 384 041
- US-A- 2 323 662
- US-A1- 2009 212 649

## Beschreibung

Die vorliegende Erfindung betrifft eine elektrische Maschine,
- wobei die elektrische Maschine einen Stator und einen Rotor aufweist,
- wobei der Rotor auf einer um eine Rotationsachse rotierbaren Rotorwelle angeordnet ist,
- wobei der Stator, bezogen auf die Rotationsachse, den Rotor radial außen umgibt,
- wobei der Stator, bezogen auf die Rotationsachse, radial außen von einem einstückigen Gehäuse umgeben ist.

Bei Antrieben in Tatzausführung - insbesondere Bahnantrieben und insbesondere oftmals mit einstufigen integrierten Getrieben - besteht oftmals ein Konflikt zwischen der elektrischen Antriebsmaschine einerseits und der Treibradachse andererseits. Dies gilt ganz besonders bei hohen Traktionsanforderungen. Zur Lösung dieses Problems ist im Stand der Technik bekannt, den elektrischen Antrieb entsprechend einzuschneiden und dadurch Platz für die Treibradachse zu schaffen. Aufgrund des Einschnitts ist es jedoch nicht möglich, das Motorgehäuse als geschlossenes Ringgehäuse auszubilden. Daher wird im Stand der Technik der Antriebsmotor in der Regel als Schweißkonstruktion mit Druckplatten und Zugleisten ausgeführt. Eine derartige Schweißkonstruktion ist aufwändig. Weiterhin sind bei dieser Ausgestaltung viele seriell aufeinanderfolgende Bearbeitungsvorgänge erforderlich, die nicht parallelisiert werden können.

Alternativ ist es selbstverständlich möglich, die Treibradachse entsprechend entfernt vom Antrieb anzuordnen. Diese prinzipiell mögliche Ausgestaltung benötigt jedoch erheblichen Platz, der oftmals nicht zur Verfügung steht. Weiterhin hat der Abstand Einfluss auf die Gestaltung des Getriebes. Ein vergrößerter Abstand kann beispielsweise dazu führen, dass weitere Getriebestufen eingeführt werden müssen. Weiterhin ist es selbstverständlich möglich, den Antrieb entsprechend kleiner zu gestalten. Dies führt jedoch dazu, dass das Leistungsvermögen des Antriebs - insbesondere das maximal mögliche Drehmoment, die maximal mögliche Dauerleistung und die maximal mögliche kurzzeitige Überlastleistung - entsprechend reduziert ist.

Aus den Druckschriften GB 384 041 und US 2 323 662 sind Beispiele für Bahnantriebsmotoren und ihre Anordnung bezüglich der Treibradachse bekannt.

Die Aufgabe der vorliegenden Erfindung besteht darin, eine elektrische Maschine zu schaffen, die konstruktiv einfach aufgebaut ist, Platz sparend relativ zu einer parallel zur Rotationsachse verlaufenden Welle anordenbar ist und dennoch ein hohes Leistungsvermögen besitzt.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 8.

Erfindungsgemäß wird eine elektrische Maschine der eingangs genannten Art dadurch ausgestaltet,
- dass das Gehäuse sich um die Rotationsachse herum gesehen nur über einen Teilwinkelbereich erstreckt, so dass um die Rotationsachse herum gesehen ein Restwinkelbereich verbleibt, in dem der Stator nicht von dem Gehäuse umgeben ist, und
- dass das Gehäuse in an den Enden des Teilwinkelbereichs gelegenen Endbereichen gehäuseseitige Formschlusselemente aufweist, die im Zusammenwirken mit statorseitigen Formschlusselementen einen Formschluss des Gehäuses mit dem Stator bewirken.

Das Gehäuse kann insbesondere ein Gussteil sein.

In der Regel weist der Stator, bezogen auf die Rotationsachse, radial außen eine Außenwand auf, die in dem Teilwinkelbereich einen zylindrisch ausgebildeten Abschnitt aufweist, der einen Zylinderradius definiert. In einer bevorzugten Ausgestaltung der vorliegenden Erfindung weist der Stator im Restwinkelbereich eine sich parallel zur Rotationsachse erstreckende Ausnehmung auf. Dadurch ist es möglich, dass ein Abstand der Außenwand des Stators im Bereich der Ausnehmung kleiner als der Zylinderradius ist.

Das Gehäuse kann auf prinzipiell beliebige Weise mit dem Stator verbunden sein. Vorzugsweise ist das Gehäuse auf den Stator aufgeschrumpft.

In einer besonders bevorzugten Ausgestaltung der erfindungsgemäßen elektrischen Maschine weist das Gehäuse in den Endbereichen Ausnehmungen auf, die sich in einer zur Rotationsachse orthogonalen Ebene gesehen in Richtung einer Winkelhalbierenden des Restwinkelbereichs erstrecken. Durch diese Ausgestaltung können insbesondere Adapter und Halteelemente, die im Rahmen der Herstellung der elektrischen Maschine sinnvoll sind, auf einfache Weise mit dem Gehäuse verbunden werden.

Oftmals weist das Gehäuse in einer zur Rotationsachse orthogonalen Ebene gesehen eine im wesentlichen rechteckige Außenkontur auf. Vorzugsweise liegen im Falle einer derartigen Gestaltung die Endbereiche innerhalb derselben Seite der rechteckigen Außenkontur.

Oftmals wirkt die elektrische Maschine über ein Getriebe auf eine Antriebswelle, wobei die Antriebswelle eine parallel zur Rotationsachse verlaufende Wellenachse aufweist. In diesem Fall ist vorzugsweise die Antriebswelle von der Rotationsachse aus gesehen im Restwinkelbereich angeordnet und taucht, bezogen auf die Rotationsachse, radial zwischen die Endbereiche des Gehäuses ein.

Die statorseitigen Formschlusselemente und die gehäuseseitigen Formschlusselemente können nach Bedarf ausgebildet sein. Vorzugsweise sind die statorseitigen Formschlusselemente als Vorsprünge ausgebildet, die von den gehäuseseitigen Formschlusselementen übergriffen sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine im Längsschnitt,
- FIG 2: die elektrische Maschine von FIG 1 im Querschnitt,
- FIG 3: ein Gehäuse der elektrischen Maschine von FIG 1 mit einem Adapter und
- FIG 4: eine Seitenansicht des Gehäuses der elektrischen Maschine von FIG 1 im Schnitt.

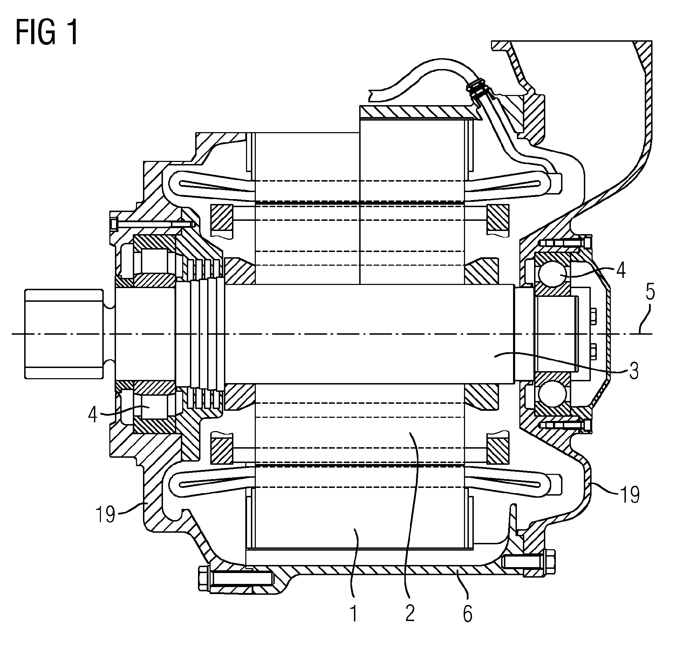

Die FIG 1 bis 4 zeigen verschiedene Aspekte ein und derselben elektrischen Maschine. Sie werden daher nachfolgend gemeinsam erläutert.

Gemäß den FIG weist eine elektrische Maschine einen Stator 1 und einen Rotor 2 auf. Der Rotor 2 ist drehfest auf einer Rotorwelle 3 angeordnet. Beispielsweise kann der Rotor 2 auf die Rotorwelle 3 aufgeschrumpft sein. Die Rotorwelle 3 ist in Lagern 4 gelagert und dadurch um eine Rotationsachse 5 rotierbar. Die Lager 4 können nach Bedarf als Kugellager, als Rollenlager, als Gleitlager, als Magnetlager usw. ausgebildet sein.

Soweit nachfolgend die Begriffe "axial", "radial" und "tangential" verwendet werden, sind sie stets auf die Rotationsachse 5 bezogen. "Axial" ist eine Richtung parallel zur Rotationsachse 5. "Radial" ist eine Richtung orthogonal zur Rotationsachse 5 auf die Rotationsachse 5 zu oder von ihr weg. "Tangential" ist eine Richtung, die sowohl zur Axialrichtung als auch zur Radialrichtung orthogonal ist. Tangential ist also eine Richtung, die in konstantem Radialabstand und bei konstanter Axialposition kreisförmig um die Rotationsachse 5 herum gerichtet ist.

Im Rahmen der vorliegenden Erfindung kommt es entscheidend auf den mechanisch-konstruktiven Aufbau der elektrischen Maschine an. Der elektrische Aufbau des Stators 1 und des Rotors 2 ist im Rahmen der vorliegenden Erfindung hingegen von untergeordneter Bedeutung. Der elektrische Aufbau des Stators 1 und des Rotors 2 werden daher nachfolgend nicht näher erläutert.

Der Stator 1 umgibt den Rotor 2 radial außen. Die elektrische Maschine ist also als Innenläufer ausgebildet. Der Stator 1 wiederum ist radial außen von einem Gehäuse 6 umgeben. Das Gehäuse 6 ist einstückig ausgebildet. Es kann beispielsweise ein Gussteil sein. Das Gehäuse 6 erstreckt sich in Tangentialrichtung nur über einen Teilwinkelbereich α. In Tangentialrichtung verbleibt somit ein Restwinkelbereich β, in dem der Stator 1 nicht von dem Gehäuse 6 umgeben ist. Der Teilwinkelbereich α und der Restwinkelbereich β sind komplementär zueinander. Sie ergänzen sich also zu 360°. Weiterhin ist der Restwinkelbereich β in der Regel relativ klein. Meist beträgt er maximal 30°, beispielsweise ca. 15° bis ca. 25°. Gemäß Ausführungsbeispiel liegt er bei etwa 20°.

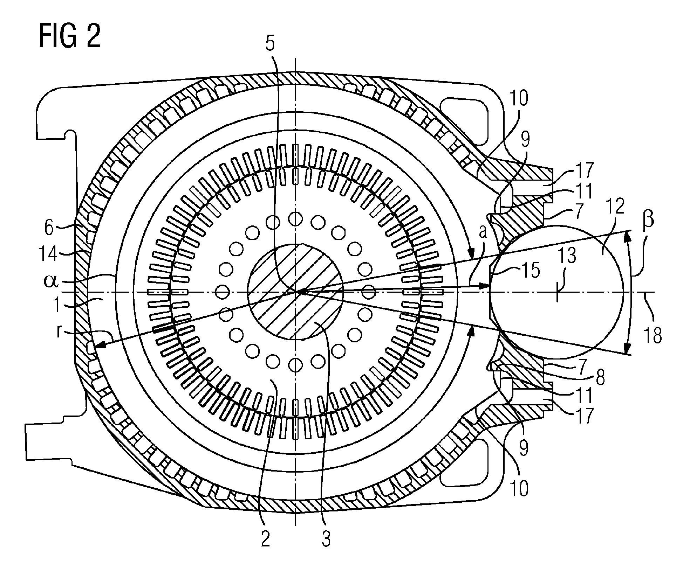

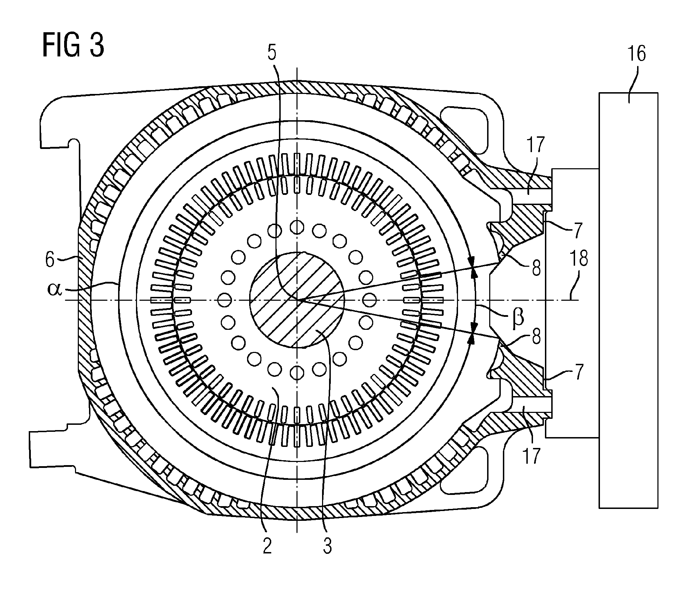

Das Gehäuse 6 weist in Endbereichen 7, die an den Enden des Teilwinkelbereichs α gelegen sind, gehäuseseitige Formschlusselemente 8 auf. Die gehäuseseitigen Formschlusselemente 8 bewirken im Zusammenwirken mit statorseitigen Formschlusselementen 9 einen Formschluss des Gehäuses 6 mit dem Stator 1. Beispielsweise können die statorseitigen Formschlusselemente 9 entsprechend der Darstellung in den FIG 2 und 3 als Vorsprünge ausgebildet sein, die von den gehäuseseitigen Formschlusselementen 8 übergriffen sind. In diesem Fall weisen die statorseitigen Formschlusselemente 9 vorzugsweise weiterhin Anlaufschrägen 10 auf. Sie können - nicht aber müssen - weiterhin zusätzlich Ablaufschrägen 11 aufweisen.

Das Gehäuse 6 kann in prinzipiell beliebiger Weise mit dem Stator 1 verbunden sein. Beispielsweise kann es auf den Stator 1 aufgeschrumpft sein.

Die erfindungsgemäße elektrische Maschine kann prinzipiell universell verwendet werden. In vielen Fällen wird sie als Tatzlagerantrieb in Schienenfahrzeugen verwendet werden. Insbesondere im Fall der Verwendung als Tatzlagerantrieb, prinzipiell aber auch bei anderen Verwendungen, kann die elektrische Maschine über ein Getriebe auf eine Antriebswelle 12 wirken. Die Antriebswelle 12 weist in derartigen Fällen oftmals eine Wellenachse 13 auf, die parallel zur Rotationsachse 5 verläuft. Von der Rotationsachse 5 aus gesehen ist in derartigen Fällen die Antriebswelle 12 im Restwinkelbereich β angeordnet. Weiterhin taucht die Antriebswelle 12 in Radialrichtung zwischen die Endbereiche 7 des Gehäuses 6 ein.

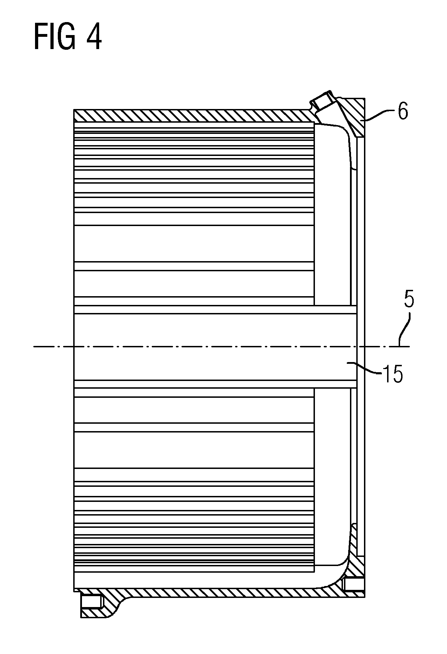

Der Stator 1 weist radial außen eine Außenwand 14 auf. Die Außenwand 14 weist in dem Teilwinkelbereich α einen Abschnitt auf, der einen Zylinderradius r definiert. Meist weist die Außenwand 14 des Stators 1 innerhalb des Teilwinkelbereichs α mit Ausnahme der Endbereiche 7 den Zylinderradius r auf. In einer besonders bevorzugten Ausgestaltung der erfindungsgemäßen elektrischen Maschine weist der Stator 1 im Restwinkelbereich β eine Ausnehmung 15 auf. Die Ausnehmung 15 erstreckt sich - siehe FIG 4 - parallel zur Rotationsachse 5. Dadurch ist es möglich, dass im Bereich der Ausnehmung 15 ein Abstand a der Außenwand 14 des Stators 1 kleiner als der Zylinderradius ist. Insbesondere ist es in diesem Fall möglich, dass die Antriebswelle 12 in Radialrichtung nicht nur zwischen die Endbereiche 7 des Gehäuses 6 eintaucht, sondern auch in die Ausnehmung 15. Ein minimaler Abstand der Antriebswelle 12 von der Rotationsachse 5 kann daher in dem Bereich der Ausnehmung 15 kleiner als der Zylinderradius r sein.

Erfindungsgemäß ist das Gehäuse 6, wie vorstehend beschrieben, nicht vollständig ringförmig ausgebildet, sondern im Restwinkelbereich β unterbrochen. Im Rahmen des Herstellungsprozesses der elektrischen Maschine ist es (zeitweise) jedoch erforderlich, eine geschlossene Struktur zur Verfügung zu stellen. Dies wird dadurch erreicht, dass während dieser Zeiten Adapter 16 (siehe FIG 3) mit den Endbereichen 7 des Gehäuses 6 verbunden werden. Um eine derartige Verbindung eines Adapters 16 mit dem Gehäuse 6 zu ermöglichen, weist das Gehäuse 6 in den Endbereichen 7 Ausnehmungen 17 auf. Die Ausnehmungen 17 erstrecken sich gemäß den FIG 2 und 3 in einer zur Rotationsachse 5 orthogonalen Ebene gesehen in Richtung einer Winkelhalbierenden 18 des Restwinkelbereichs β. In die Ausnehmungen 17 können beispielsweise von radial außen am Adapter 16 angeordnete zapfenartige Vorsprünge eingeführt werden. Alternativ kann der Adapter 16 Gewindebohrungen aufweisen, in welche Gewindeschrauben eingeführt werden, welche von radial innen durch die Ausnehmungen 17 hindurchgeführt werden. Auch andere Ausgestaltungen sind möglich. Beispielsweise können Ausnehmungen 17 mit Gewinden versehen sein, in welche Schrauben eingedreht werden.

Das Gehäuse 6 kann eine Außenkontur aufweisen, die in einer zur Rotationsachse 5 orthogonalen Ebene gesehen im wesentlichen rund ist. In vielen Fällen weist das Gehäuse 6 jedoch eine Außenkontur auf, die in einer zur Rotationsachse 5 orthogonalen Ebene gesehen im wesentlichen rechteckig ist, meist sogar quadratisch. In diesem Fall liegen die Endbereiche 7 vorzugsweise innerhalb derselben Seite der rechteckigen Außenkontur.

Die erfindungsgemäße elektrische Maschine weist viele Vorteile auf. So ergibt sich beispielsweise eine kompakte und leistungsfähige elektrische Maschine. Weiterhin wird durch die formschlüssige Verbindung des Gehäuses 6 mit dem Stator eine zusätzliche Sicherung gegen Verdrehen des Stators 1 gegenüber dem Gehäuse 6 geschaffen. Weiterhin sichert der Formschluss den Schrumpfsitz zwischen dem Gehäuse 6 und dem Stator 1. Weiterhin kann das Gehäuse 6 Lagerschilde 19 (siehe FIG 1) aufnehmen. Eines der Lagerschilde 19 kann sogar einstückig mit dem Gehäuse 6 verbunden sein. Schließlich ergibt sich durch die erfindungsgemäß ausgebildete elektrische Maschine eine Gehäusekonstruktion, die weitestgehend geschlossen ist und nur im Restwinkelbereich β offen ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine einen Stator (1) und einen Rotor (2) aufweist,
- wobei der Rotor (2) auf einer um eine Rotationsachse (5) rotierbaren Rotorwelle (3) angeordnet ist,
- wobei der Stator (1), bezogen auf die Rotationsachse (5), den Rotor (2) radial außen umgibt,
- wobei der Stator (1), bezogen auf die Rotationsachse (5), radial außen von einem einstückigen Gehäuse (6) umgeben ist,
- **dadurch gekennzeichnet, dass** das Gehäuse (6) sich um die Rotationsachse (5) herum gesehen nur über einen Teilwinkelbereich (α) erstreckt, so dass um die Rotationsachse (5) herum gesehen ein Restwinkelbereich (β) verbleibt, in dem der Stator (1) nicht von dem Gehäuse (6) umgeben ist, und
- wobei das Gehäuse (6) in an den Enden des Teilwinkelbereichs (α) gelegenen Endbereichen (7) gehäuseseitige Formschlusselemente (8) aufweist, die im Zusammenwirken mit statorseitigen Formschlusselementen (9) einen Formschluss des Gehäuses (6) mit dem Stator (1) bewirken.

2. Elektrische Maschine nach Anspruch 1, **dadurch gekennzeichnet, dass** das Gehäuse (6) ein Gussteil ist.

3. Elektrische Maschine nach Anspruch 1 oder 2, **dadurch gekennzeichnet, dass** der Stator (1), bezogen auf die Rotationsachse (5), radial außen eine Außenwand (14) aufweist, dass die Außenwand (14) in dem Teilwinkelbereich (α) einen zylindrisch ausgebildeten Abschnitt aufweist, der einen Zylinderradius (r) definiert, dass der Stator (1) im Restwinkelbereich (β) eine sich parallel zur Rotationsachse (5) erstreckende Ausnehmung (15) aufweist und dass ein Abstand (a) der Außenwand (14) des Stators (1) im Bereich der Ausnehmung (15) kleiner als der Zylinderradius (r) ist.

4. Elektrische Maschine nach Anspruch 1, 2 oder 3, **da- durch gekennzeichnet** , dass das Gehäuse (6) auf den Stator (1) aufgeschrumpft ist.

5. Elektrische Maschine nach einem der obigen Ansprüche, **dadurch gekennzeichnet, dass** das Gehäuse (6) in den Endbereichen (7) Ausnehmungen (17) aufweist, die sich in einer zur Rotationsachse (5) orthogonalen Ebene gesehen in Richtung einer Winkelhalbierenden (18) des Restwinkelbereichs (β) erstrecken.

6. Elektrische Maschine nach einem der obigen Ansprüche, **dadurch gekennzeichnet , dass** das Gehäuse (6) in einer zur Rotationsachse (5) orthogonalen Ebene gesehen eine im wesentlichen rechteckige Außenkontur aufweist und dass die Endbereiche (7) innerhalb derselben Seite der rechteckigen Außenkontur liegen.

7. Elektrische Maschine nach einem der obigen Ansprüche, **dadurch gekennzeichnet , dass** die elektrische Maschine über ein Getriebe auf eine Antriebswelle (12) wirkt, dass die Antriebswelle (12) eine parallel zur Rotationsachse (5) verlaufende Wellenachse (13) aufweist und dass die Antriebswelle (12) von der Rotationsachse (5) aus gesehen im Restwinkelbereich (β) angeordnet ist und, bezogen auf die Rotationsachse (5), radial zwischen die Endbereiche (7) des Gehäuses (6) eintaucht.

8. Elektrische Maschine nach einem der obigen Ansprüche, **dadurch gekennzeichnet, dass** die statorseitigen Formschlusselemente (9) als Vorsprünge ausgebildet sind, die von den gehäuseseitigen Formschlusselementen (8) übergriffen sind.

## Claims

1. Electrical machine,
- wherein the electrical machine has a stator (1) and a rotor (2),
- wherein the rotor (2) is disposed on a rotor shaft (3) able to be rotated about an axis of rotation (5),
- wherein the stator (1), in relation to the axis of rotation (5), surrounds the rotor (2) radially to the outside,
- wherein the stator (1), in relation to the axis of rotation (5), is surrounded radially to the outside by a one-piece housing (6),
**characterised in that**
- the housing (6) only extends over a part angular area (α), viewed about the axis or rotation (5) so that, viewed about the axis of rotation (5), a remaining angular (β) area is left in which the stator (1) is not surrounded by the housing (6) and
- wherein the housing (6) has housing-side form-fit elements (8) in end areas (7) located at the ends of the part angular area (α), which interact with stator-side form-fit elements (9) to make a form-fit between the housing (6) and the stator (1).

2. Electrical machine according to claim 1, **characterised in that** the housing (6) is a casting.

3. Electrical machine according to claim 1 or 2, **characterised in that** the stator (1), in relation to the axis of rotation (5), has an outer wall (14) radially to its outside, that the outer wall (14) in the part angular area (α) has a cylindrically embodied section which defines a cylinder radius (r), that the stator (1) in the remaining angular area (β) has a recess (15) extending in parallel to the axis of rotation (5) and that a distance (a) of the outer wall (14) of the stator (1) in the area of the recess (15) is smaller than the cylinder radius (r).

4. Electrical machine according to claim 1, 2 or 3, **characterised in that** the housing (6) is shrunk onto the stator (1).

5. Electrical machine according to one of the above claims, **characterised in that** the housing (6) has recesses (17) in the end areas (7) which, viewed in a plane orthogonal to the axis of rotation (5), extend in the direction of an angle halving (18) of the remaining angular area (β).

6. Electrical machine according to one of the above claims, **characterised in that** the housing (6), viewed in a plane orthogonal to the axis of rotation (5), has an essentially rectangular outer contour and that the end areas (7) lie inside the same side of the rectangular outer contour.

7. Electrical machine according to one of the above claims, **characterised in that** the electric machine acts via a transmission on a drive shaft (12), that the drive shaft (12) has a shaft axis (13) running in parallel to the axis of rotation (5) and that the drive shaft (12), viewed outwards from the axis of rotation (5), is disposed in the remaining angular area (β) and, in relation to the axis of rotation (5), penetrates radially between the end areas (7) of the housing (6).

8. Electrical machine according to one of the above claims, **characterised in that** the stator-side form-fit elements (9) are embodied as projections, over which the housing-side form-fit elements (8) grip.

## Revendications

1. Machine électrique,
- la machine électrique ayant un stator (1) et un rotor (2),
- le rotor étant monté sur un arbre (3) rotorique pouvant tourner autour d'un axe (5) de rotation,
- le stator (1) entoure, rapporté à l'axe (5) de rotation, radialement vers l'extérieur le rotor (2),
- le stator (1) étant, rapporté à l'axe (5) de rotation, entouré également vers l'extérieur par une enveloppe (6) d'une seule pièce,
- **caractérisée en ce que**
l'enveloppe (6) s'étend, considéré autour de l'axe (5) de rotation, seulement sur une région (α) angulaire partielle de manière à laisser subsister, considéré autour de l'axe (5) de rotation, une région (β) angulaire restante dans laquelle le stator (1) n'est pas entouré par l'enveloppe (6) et
- dans laquelle l'enveloppe (6) a, dans des parties (7) d'extrémité mises aux extrémités de la région (α) angulaire partielle, des éléments (8) de complémentarité de forme du côté de l'enveloppe qui, en coopération avec des éléments (9) de complémentarité de forme du côté du stator, donnent une complémentarité de forme de l'enveloppe (6) avec le stator (1).

2. Machine électrique suivant la revendication 1, **caractérisée en ce que** l'enveloppe (6) est une pièce coulée.

3. Machine électrique suivant la revendication 1 ou 2, **caractérisée en ce que** le stator (1) a, rapporté à l'axe (5) de rotation radialement vers l'extérieur, une paroi (14) extérieure, **en ce que** la paroi (14) extérieure a, dans la région (α) angulaire partielle, une partie qui est constituée cylindriquement et qui définit un rayon (r) de cylindre, **en ce que** le stator (1) a, dans la région (β) angulaire restante, un évidemment (15) s'étendant parallèlement à l'axe (5) de rotation et **en ce qu'**une distance (a) à la paroi (14) extérieure du stator (1) est dans la région de l'évidemment (15) plus petite que le rayon (r) du cylindre.

4. Machine électrique suivant la revendication 1, 2 ou 3, **caractérisée en ce que** l'enveloppe (6) est rétreinte sur le stator (1).

5. Machine électrique suivant l'une des revendications précédentes, **caractérisée en ce que** l'enveloppe (6) a, dans les régions (7) d'extrémité, des évidements (17) qui s'étendent, considéré dans la direction d'une bissectrice (18) de la région (β) angulaire restante, dans un plan orthogonal à l'axe (5) de rotation.

6. Machine électrique suivant l'une des revendications précédentes, **caractérisée en ce que** l'enveloppe (6) a, considéré dans un plan orthogonal à l'axe (5) de rotation, un contour extérieur sensiblement rectangulaire et **en ce que** les régions (7) d'extrémité se trouvent du même côté du contour extérieur rectangulaire.

7. Machine électrique suivant l'une des revendications précédentes, **caractérisée en ce que** la machine électrique agit par une transmission sur un arbre d'entraînement, **en ce que** l'arbre (12) d'entraînement a un axe (13) d'arbre s'étendant parallèlement à l'axe (5) de rotation et **en ce que** l'arbre (12) d'entraînement est disposé, considéré à partir de l'axe (5) de rotation, dans la région (β) angulaire restante et, rapporté à l'axe (5) de rotation, pénètre radialement entre les zones (7) d'extrémité de l'enveloppe (6).

8. Machine électrique suivant l'une des revendications précédentes, **caractérisée en ce que** les éléments (9) de complémentarité de forme du côté du stator sont constitués sous la forme de saillies, qui sont chevauchées par des éléments (8) de complémentarité de forme du côté de l'enveloppe.
